# EUROPEAN PATENT APPLICATION

(11) **EP 4 769 771 A1**
(43) Date of publication of application: **01.07.2026**
(21) Application number: 25807864.1
(22) Date of filing: 07.05.2025
(51) Int. Cl.: H01M 50/383, H01M 50/291, H01M 50/271, H01M 50/342, H01M 50/367

(54) **BATTERY PACK AND VEHICLE INCLUDING SAME**

(30) Priority: 22.05.2024 KR 20240066701
(71) Applicant: LG ENERGY SOLUTION, LTD., Seoul 07335 (KR)
(72) Inventor: PARK, Ju-Hun, Daejeon 34122 (JP); KIM, Soo-Youl, Daejeon 34122 (JP); MUN, Jeong-O, Daejeon 34122 (JP)
(74) Representative: Plasseraud IP
(86) International application number: PCT/KR2025/006104
(87) International publication number: WO 2025/244324

(57) **Abstract**

The present disclosure relates to a battery pack including: a plurality of battery cells; a pack case configured to store the plurality of battery cells; and a cover member provided in a space between the plurality of battery cells and the pack case so as to extend in a horizontal direction, and configured to block movement of venting gas generated from the battery cell.

## Description

### TECHNICAL FIELD

The present disclosure relates to a battery pack and a vehicle including the same.

This application is based on and claims priority from Korean Patent Application No. 10-2024-0066701, filed on May 22, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. When high output voltage is required, multiple battery cells may be connected in series to form a battery module or battery pack. In addition, to increase charge/discharge capacity, multiple battery cells may be connected in parallel to configure a battery module or battery pack. Accordingly, the number of battery cells included in the battery module or pack may be variously configured depending on the required output voltage or charge/discharge capacity.

Meanwhile, since battery cells undergo chemical reactions during charging and discharging, their performance may deteriorate if they are used at a temperature higher than an appropriate temperature, and if the heat fails to be controlled to the appropriate temperature, unexpected ignition or explosion is likely to occur. Thus, if a thermal event such as thermal runaway occurs inside a battery pack including multiple battery modules, high-temperature gas or flames emitted from the battery cell included therein may spread to adjacent battery modules, causing a chain reaction of explosions in the battery modules, which poses a significant safety risk.

Therefore, it is necessary to develop a structure capable of quickly discharging high-temperature gas or flames generated inside a battery module to the outside, when thermal runaway occurs in the battery module, thereby relieving heat accumulation inside the battery module.

In addition, a structure is required to be developed to prevent the discharged gas or flames from flowing into other adjacent battery modules when thermal runaway occurs in a battery module.

### DISCLOSURE

### Technical Problem

The present disclosure is designed to solve the problems of the related art, and therefore the present disclosure is directed to providing a battery pack with improved safety and reliability by minimizing the thermal energy transferred to adjacent battery modules when thermal runaway occurs in a battery module, thereby preventing or suppressing thermal runaway propagation between the battery modules.

In addition, the present disclosure is also to provide a vehicle that includes such a battery pack.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery cells; a pack case configured to store the plurality of battery cells; and a cover member provided in a space between the plurality of battery cells and the pack case so as to extend in a horizontal direction, and configured to block movement of venting gas generated from the battery cell.

The battery pack may further include a plurality of module cases configured to store the plurality of battery cells by grouping them, and having a venting hole formed on at least one side thereof to allow venting gas to be discharged to the outside.

Some of the plurality of module cases may be disposed so that front surfaces where module terminals are provided face each other, and the venting hole may be formed on a rear side of the module case.

The cover member may be configured to surround an upper portion of a rear side of the module case.

The pack case may include a cross-beam provided between the plurality of battery cells, and the cover member may be configured to cover the top of the cross-beam.

The cross-beam may be configured to have a height less than that of the battery cell, and the cover member may be configured such that at least a portion thereof protrudes toward the cross-beam.

The cover member may be configured to be in close contact with the cross-beam.

The cover member may be configured to cover a top of both the cross-beam and the battery cell.

The cover member may be configured such that the cross-beam is inserted thereinto.

The cover member may be configured as a single sheet covering the plurality of battery cells.

The pack case may include a base frame configured such that the battery cells are seated thereon, and a side frame configured to extend upward from an edge of the base frame, and the cover member may be configured to be spaced a predetermined distance apart from the side frame.

The pack case may include a venting device configured to communicate with a space between the cover member and the side frame.

In another aspect of the present disclosure, there is provided a vehicle including a battery pack according to the present disclosure.

### Advantageous Effects

According to one aspect of the present disclosure, it is possible to minimize the thermal energy transferred to adjacent battery modules when thermal runaway occurs in a battery module. Therefore, the propagation of thermal runaway between the battery modules can be prevented or suppressed, thereby ensuring the safety and reliability of the battery pack.

In addition, according to another aspect of the present disclosure, since high-temperature gas or flame can be quickly discharged to the outside of the battery pack, it is possible to dissipate the heat accumulation inside the battery pack.

In addition, according to another aspect of the present disclosure, when thermal runaway occurs in a battery module, it is possible to prevent high-temperature gas or flame discharged to the outside of the battery module from flowing back into another battery module.

In addition, according to another aspect of the present disclosure, it is possible to prevent or delay events, such as fire or explosion, due to thermal runaway of a battery pack or a device equipped with a battery pack.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view of a battery pack according to an embodiment of the present disclosure.
FIG. 2 is an exploded perspective view of a battery pack according to an embodiment of the present disclosure.
FIG. 3 is a perspective view illustrating the internal configuration of a battery pack according to an embodiment of the present disclosure.
FIG. 4 is a longitudinal section of a battery pack according to an embodiment of the present disclosure, which may be a sectional view taken, for example, along line I - I' in FIG. 1.
FIG. 5 is an overall perspective view of a battery module included in a battery pack according to an embodiment of the present disclosure.
FIG. 6 is an exploded perspective view of a battery module included in a battery pack according to an embodiment of the present disclosure.
FIG. 7 is an enlarged cross-sectional view of a portion of a battery pack according to an embodiment of the present disclosure.
FIG. 8 is a bottom perspective view of a cover member included in a battery pack according to an embodiment of the present disclosure.
FIG. 9 is a cross-sectional view of a battery pack to which a cover member is applied according to another embodiment of the present disclosure.
FIG. 10 is a cross-sectional view of a battery pack to which a cover member is applied according to another embodiment of the present disclosure.
FIG. 11 is a cross-sectional view of a battery pack according to an embodiment of the present disclosure.
FIG. 12 is a cross-sectional view of a battery pack according to an embodiment of the present disclosure, which illustrates a discharge direction of venting gas during thermal runaway of a battery module.
FIG. 13 is a top view of a battery pack according to an embodiment of the present disclosure, which illustrates a discharge direction of venting gas during thermal runaway of a battery module.
FIG. 14 is a cross-sectional view of a battery pack to which a cover member is applied according to another embodiment of the present disclosure.
FIG. 15 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up(ward), down(ward), left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction.

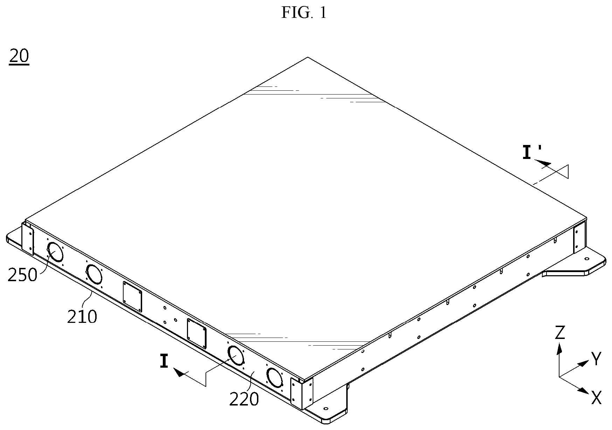

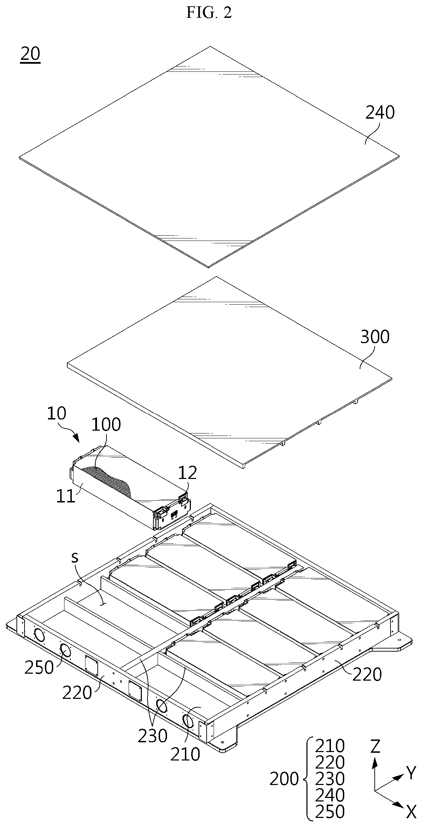

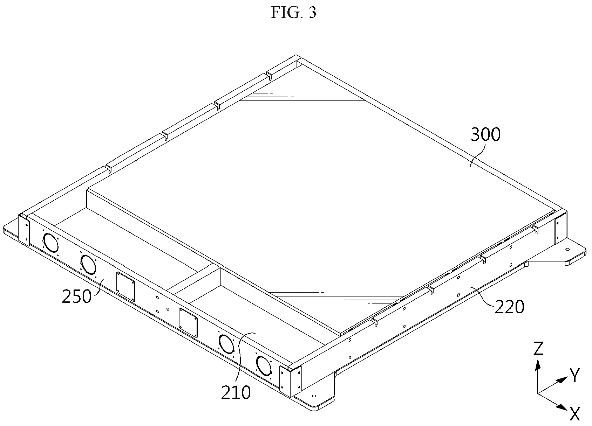

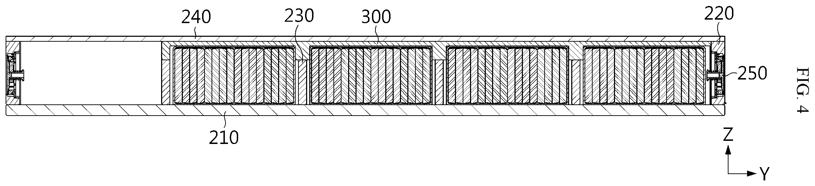

FIG. 1 is an overall perspective view of a battery pack according to an embodiment of the present disclosure, FIG. 2 is an exploded perspective view of a battery pack according to an embodiment of the present disclosure, and FIG. 3 is a perspective view illustrating the internal configuration of a battery pack according to an embodiment of the present disclosure. In addition, FIG. 4 is a longitudinal section of a battery pack according to an embodiment of the present disclosure, which may be a sectional view taken, for example, along line I - I' in FIG. 1.

Referring to FIGS. 1 to 4, a battery pack 20 according to an embodiment of the present disclosure includes a battery cell 100, a pack case 200, and a cover member 300.

First, referring to FIG. 2, a plurality of battery cells 100 may be included. In addition, the plurality of battery cells 100 may include an electrode assembly, a cell case that stores the electrode assembly, and an electrode lead that is connected to the electrode assembly and extends outward from the cell case to function as an electrode terminal. In this case, the plurality of battery cells 100 may be electrically connected to each other.

The battery cell 100 may be a pouch-type secondary battery. The cell case of such a pouch-type secondary battery may be configured as a pouch in which a metal layer made of aluminum is interposed between polymer layers.

The present disclosure is not limited to a specific type or shape of the battery cell 100, and various battery cells 100 known at the time of filing the present disclosure may be applied to configure the battery pack 20 of the present disclosure. In the present embodiment, although a pouch-type secondary battery with high energy density and easy stacking will be described as shown in the drawing, it is obvious that a cylindrical or prismatic secondary battery may also be applied to the battery cell 100.

The plurality of battery cells 100 may be disposed side by side in the front-back direction (X-axis direction) while standing in the vertical direction (Z-axis direction).

The pack case 200 may be configured to store a plurality of battery cells 100. The pack case 200 may have a plurality of storage spaces S configured to store the plurality of battery cells by dividing them. The storage space S is an empty space and may be configured in a shape capable of storing a predetermined number of divided battery cells 100 therein. Specifically, the storage space S may be partitioned by the cross-beam 230 described below and configured in a shape capable of storing the battery cells 100 therein.

The pack case 200 may be made of a material capable of securing mechanical strength, such as metal, for example, steel or SUS, or plastic, or may include such a material in order to safely protect the battery cells 100 stored therein.

Referring to FIGS. 3 and 4, the cover member 300 may be provided in the space between the plurality of battery cells 100 and the pack case 200. For example, the cover member 300 may be disposed at the top of the battery cells 100. In particular, the cover member 300 may be configured to fill the space between the plurality of battery cells 100 and the pack case 200. The cover member 300 may be configured to extend along the horizontal direction.

The cover member 300 may be configured to block the movement of venting gas generated from the battery cell 100. The cover member 300 may be disposed in the upper portion of the space between the battery cells 100. Accordingly, the venting gas generated from the battery cell 100 may be prevented from moving through the space between the plurality of battery cells 100 and the pack case 200.

The cover member 300 may be formed of a material having excellent heat resistance and/or fire resistance, such as mica. Alternatively, the cover member 300 may be formed of a compressible material such as silicone or polyurethane.

When a thermal event occurs in the battery cell 100, venting gas or flame may move to another battery cell 100 through the space between the battery cells 100 and the pack case 200, causing thermal runaway to propagate. However, according to the above-implemented configuration of the present disclosure, when thermal runaway occurs in a battery cell 100, venting gas or the like may be prevented from moving toward other battery cells 100, thereby minimizing the thermal energy transferred to adjacent battery cells 100. Therefore, thermal runaway propagation between the battery cells 100 may be prevented or suppressed, thereby ensuring the safety and reliability of the battery pack 20.

In addition, the cover member 300 may be configured to guide venting gas or flame to the outer space of the battery cells 100. That is, the cover member 300 may be configured to separate the storage space S of the battery cells 100 from other spaces inside the pack case 200. As a result, according to the above-implemented configuration of the present disclosure, venting gas or flame generated from the battery cell 100 may flow only outside the battery cells 100.

According to the above-implemented configuration of the present disclosure, since the battery cell 100 and the space where venting gas or flame flows are separated by the cover member 300, even if a thermal event occurs, direct thermal damage to the battery cell 100 may be minimized. In addition, the discharges released to the outer space of the cover member 300 may be prevented from flowing back into another battery cell 100. As a result, thermal propagation to other battery cells 100 may be minimized, so that the safety and reliability of the battery pack 20 may be ensured.

In particular, according to the above-implemented configuration of the present disclosure, the cover member 300 may block the movement of sparks or electrode particles to prevent the electrode particles or dust from accumulating in another battery cell 100. Accordingly, it is possible to prevent the temperature of the battery cell 100 from continuously rising due to the heat island effect.

In addition, according to the above-implemented configuration of the present disclosure, substances such as sparks or electrode particles, which may be ignition factors, may be blocked from coming into contact with oxygen outside the pack case 200, thereby preventing fire from occurring inside the pack case 200.

Meanwhile, referring to FIG. 2, the pack case 200 according to an embodiment of the present disclosure may include a base frame 210 and a side frame 220.

The base frame 210 may form the lower side of the pack case 200 and may be configured in the shape of a square plate. In addition, the base frame 210 may be configured so that a plurality of battery cells 100 are seated on its upper surface. Furthermore, the base frame 210 may have a flat upper surface so that a plurality of battery modules 10 may be stably seated thereon.

The side frame 220 may extend upward from respective edges of the base frame 210. The side frame 220 may have a plurality of unit walls so as to surround the plurality of battery cells 100 or battery modules 10. More specifically, the side frame 220 may include a right wall located at an end of the base frame 210 in the -X-axis direction, a rear wall located at an end in the +Y-axis direction, a left wall located at an end in the +X-axis direction, and a front wall located at an end in the -Y-axis direction, thereby forming the sides of the pack case 200.

In addition, the pack case 200 may further include a cross-beam 230. The cross-beam 230 may be provided between a plurality of battery cells 100. A plurality of cross-beams 230 may be provided. The cross-beams 230 may be configured to partition the storage space S into a plurality of spaces. That is, the cross-beams 230 may be configured to partition the battery cells 100 provided in the plurality of the storage spaces S arranged in rows and columns. The cross-beam 230 may be configured to connect the side frames 220 facing each other, among the plurality of side frames 220. As a result, as shown in FIG. 2, the storage space S may be partitioned into four rows and two columns by the cross-beams 230.

The pack case 200 may further include a pack lid 240 coupled to the top of the side frame 220. The pack lid 240 may be configured to form the upper surface of the pack case 200. The pack lid 240 may be configured to cover the top of the battery cells 100.

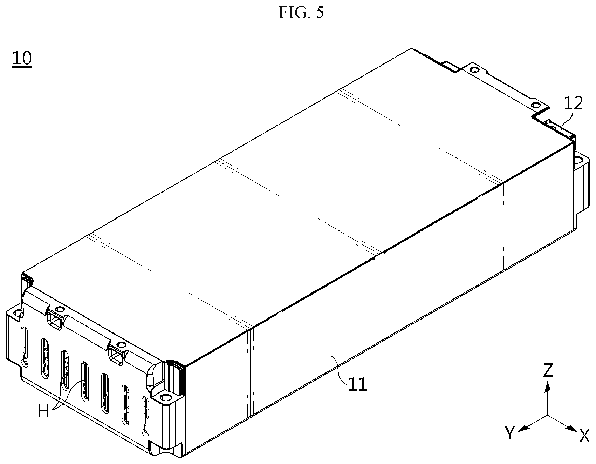

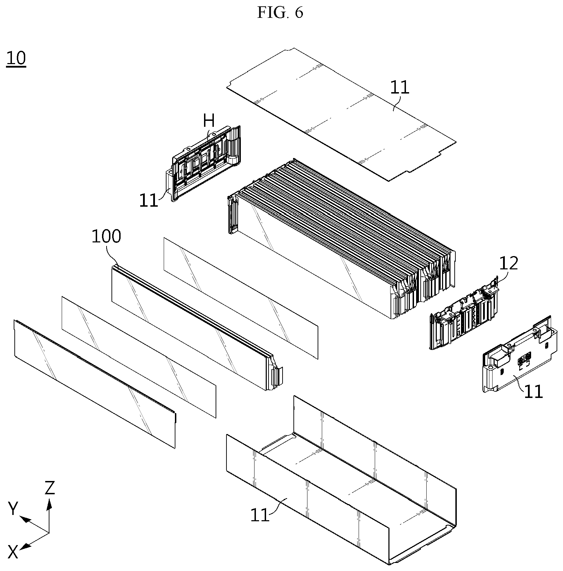

FIG. 5 is an overall perspective view of a battery module included in a battery pack according to an embodiment of the present disclosure, and FIG. 6 is an exploded perspective view of a battery module included in a battery pack according to an embodiment of the present disclosure.

Referring to FIGS. 5 and 6, a plurality of battery cells 100 may be modularized into one or more battery modules 10. That is, the battery pack 20 according to the present disclosure may include a plurality of battery modules 10, and a plurality of battery cells 100 included in the battery pack 20 may be divided and included in the plurality of battery modules 10. In this case, the plurality of battery cells 100 included in the battery module 10 may be electrically connected to each other.

A plurality of battery modules 10 may be respectively provided in each storage space S of the pack case 200. The plurality of battery modules 10 may be partitioned and separated by the cross-beams 230. In particular, the battery pack 20 according to the present disclosure may include a module case 11. The module case 11 may have an empty space formed therein, and may be configured to store at least some of the plurality of battery cells 100 in the inner space. In particular, the module case 11 may be configured to store the battery cells 100 provided in each storage space S. That is, the module case 11 may be included in each storage space S to group a plurality of battery cells 100 into a plurality of battery modules 10, and may be a boundary that physically confines the inner space of each battery module 10.

The battery module 10 may include a bus-bar assembly electrically connected to the plurality of battery cells 100 stored therein. In addition, the battery module 10 may include a module terminal 12 electrically connected to the plurality of battery cells 100. The module terminal 12 may include a positive electrode terminal and a negative electrode terminal. The module terminal 12 may be configured to be electrically or communicatively connected to a control device such as a BMS equipped in the pack case 200. The module terminal 12 may be configured such that at least a portion thereof is exposed to the outside of the module case 11.

The module terminal 12 may be provided on the side where the electrode lead of the battery cell 100 extends outward. For example, the module terminal 12 may be provided on the front side of the module case 11.

The battery module 10 may include a venting hole H. The venting hole H may be configured to allow gas generated from the battery cells 100 stored inside the module case 11 to be discharged to the outside of the module case 11. That is, the venting hole H may be provided in the module case 11 and configured to enable directional venting in a specific direction.

Meanwhile, referring to FIG. 2, a plurality of battery modules 10 may be disposed inside the pack case 200 so that their module terminals 12 face each other. For example, some of the plurality of module cases 11 may be disposed so that their front surfaces face each other.

In this case, the venting hole H may be formed on the side opposite the side where the module terminal 12 is provided. For example, as shown in FIGS. 5 and 6, the module terminal 12 may be provided on the front side of the module case 11 (in the -Y-axis direction in FIGS. 5 and 6), and the venting hole H may be formed on the rear side of the module case 11 (in the +Y-axis direction in FIGS. 5 and 6).

In this case, the cover member 300 may be configured to guide venting gas or the like discharged when thermal runaway occurs in the battery module 10 to the rear side of the battery module 10. According to the above-implemented configuration of the present disclosure, the fluid such as venting gas or the like discharged from the venting hole H may be minimized from heading toward the module terminal 12.

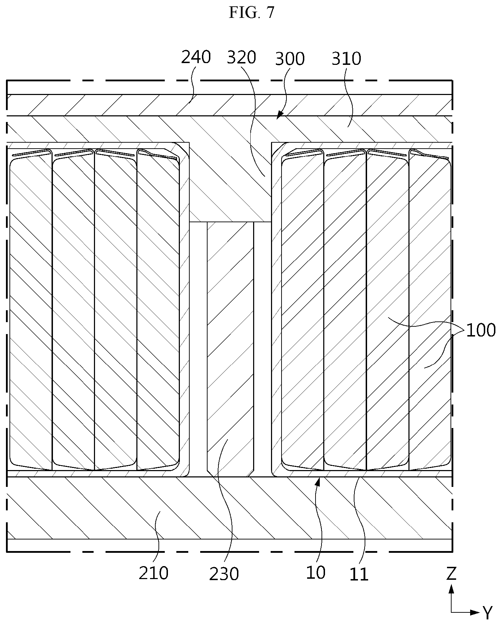

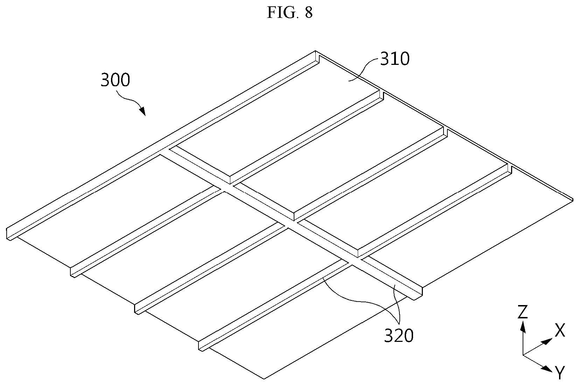

Hereinafter, the cover member 300 will be further described in more detail with reference to FIGS. 7 and 8.

FIG. 7 is an enlarged cross-sectional view of a portion of a battery pack according to an embodiment of the present disclosure, and FIG. 8 is a bottom perspective view of a cover member included in a battery pack according to an embodiment of the present disclosure.

Referring to FIG. 7, the cover member 300 may be configured to cover the top of the cross-beam 230. That is, the cover member 300 may be configured to cover the upper portion of a space between adjacent battery cells 100 or battery modules 10.

According to the above-implemented configuration of the present disclosure, since adjacent storage spaces S may be reliably separated by the cover member 300, even if a thermal event occurs in any battery module 10, venting gas or flame may be prevented from moving to adjacent battery modules 10 over the cross-beam 230. Accordingly, thermal propagation between the battery modules 10 may be prevented.

As a more specific example, as disclosed in the embodiment illustrated in FIG. 7, the cross-beam 230 may have a height less than that of the battery cell 100. In this case, the cover member 300 may be configured such that at least a portion thereof protrudes toward the cross-beam 230. That is, the cover member 300 may be configured such that at least a portion thereof is interposed between the battery modules 10.

According to the above-implemented configuration of the present disclosure, since the cover member 300 is provided in the upper portion of the space between the battery modules 10, the cover member 300 may more reliably separate the battery modules 10 from each other, thereby suppressing thermal propagation by the cross-beam 230 made of a metal material such as aluminum.

In addition, according to the above-implemented configuration of the present disclosure, since the gap between the cross-beam 230 and the cover member 300 is provided in the lower portion, the leakage of venting gas or flames through the gap between the cross-beam 230 and the cover member 300 may be prevented. Accordingly, thermal propagation between the battery modules 10 may be prevented more effectively.

Meanwhile, when the pack lid 240 and the cross-beam 230 are bolted to each other, the cover member 300 may also be bolted to the cross-beam 230. According to the above-implemented configuration of the present disclosure, the assemblability of the battery pack 20 may be improved.

In addition, the cover member 300 may be configured to be in contact with the cross-beam 230. That is, a protruding portion of the cover member 300 may be configured to come into contact with the upper end of the cross-beam 230. In particular, the cover member 300 may be made of a compressible material such as silicone so as to be in close contact with the cross-beam 230. Accordingly, the cover member 300 may be configured to be in close contact with the cross-beam 230, the battery module 10, and the pack case 200.

According to the above-implemented configuration of the present disclosure, the cover member 300 may more reliably partition and separate the spaces between the battery modules 10. Therefore, even if venting gas or flames are emitted from a battery module 10, thermal propagation to adjacent battery modules 10 may be suppressed.

Furthermore, the cover member 300 may be configured to cover the top of both the cross-beam 230 and the battery cell 100. The cover member 300 may be configured to cover not only the top of the cross-beam 230 but also the top of the battery module 10.

The cover member 300 may be provided to cover the top of at least some of the plurality of battery modules 10. For example, the cover member 300 may be configured to cover the top of the respective battery modules 10. Alternatively, as disclosed in the embodiment illustrated in FIG. 4, the cover member 300 may be configured as a single sheet covering a plurality of battery cells 100. That is, the cover member 300 may be configured to cover the entire area of the top of the plurality of battery modules 10 arranged along the horizontal direction. In this case, the upper surface of the cover member 300 may be configured to be flat.

Furthermore, the cover member 300 may be configured to be in close contact with the upper surface of the module case 11. The cover member 300 may be configured to completely fill the space formed by the battery module 10, the cross-beam 230, and the pack case 200.

More specifically, referring to FIGS. 7 and 8, the cover member 300 may include a main body 310 and a protrusion 320. The main body 310 may be placed on the battery module 10. The main body 310 may be configured in the form of a square plate. In addition, the protrusion 320 may protrude downward from the main body 310 and may be disposed on the cross-beam 230. The protrusion 320 may be configured to correspond to the shape and position of the cross-beam 230. Accordingly, the protrusion 320 may be configured to extend in the front-back direction or the left-right direction.

According to the above-implemented configuration of the present disclosure, since the cover member 300 is configured as a single sheet, the venting gas generated from the battery cell 100 may be completely blocked from moving in the space where the battery module 10 is provided. In particular, since the cover member 300 completely covers the battery module 10, the area of the battery module 10 affected by flame and/or dust may be minimized.

In addition, according to the above-implemented configuration of the present disclosure, since the sheet-shaped cover member 300 is configured to fill the space between the battery module 10 and the pack case 200, the possibility of the cover member 300 being structurally deformed by heat may be minimized.

Furthermore, according to the above-implemented configuration of the present disclosure, the cover member 300 may reliably separate the space in which the battery module 10 is stored and the external space from each other inside the pack case 200. As a result, it is possible to prevent the discharges released to the outside of the cover member 300 from affecting the battery module 10.

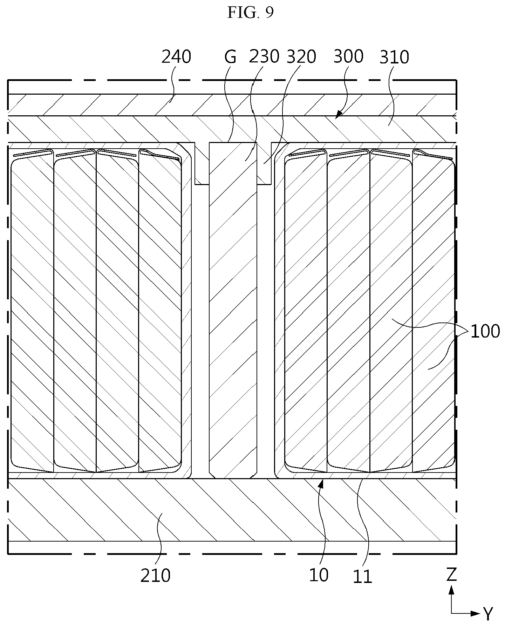

FIG. 9 is a cross-sectional view of a battery pack to which a cover member is applied according to another embodiment of the present disclosure.

As another embodiment, the cover member 300 and the cross-beam 230 may be configured to be coupled to each other. More specifically, as disclosed in the embodiment illustrated in FIG. 9, the cover member 300 may be configured such that the cross-beam 230 is inserted thereinto. The upper end of the cross-beam 230 may be configured to be inserted into the protrusion 320 of the cover member 300. That is, the cover member 300 may be configured to surround the end of the cross-beam 230. Accordingly, the fixing force between the cover member 300 and the cross-beam 230 may be improved.

More specifically, referring to FIG. 9, the cover member 300 may have a groove G formed by at least a portion being recessed inward. The cross-beam 230 may be configured to be inserted into the groove G. As a result, the upper end of the cross-beam 230 may come into close contact with the groove G without a gap.

According to the above-implemented configuration of the present disclosure, since the cross-beam 230 is inserted into the cover member 300 and supported from both sides, the fixing force between the cross-beam 230 and the cover member 300 may be further improved. In addition, according to the above-implemented configuration of the present disclosure, the sealing force between the end of the cross-beam 230 and the cover member 300 may be stably secured. Therefore, according to the above-implemented configuration, the plurality of battery modules 10 may be more reliably partitioned and separated, thereby further improving the thermal propagation prevention performance between the battery modules 10.

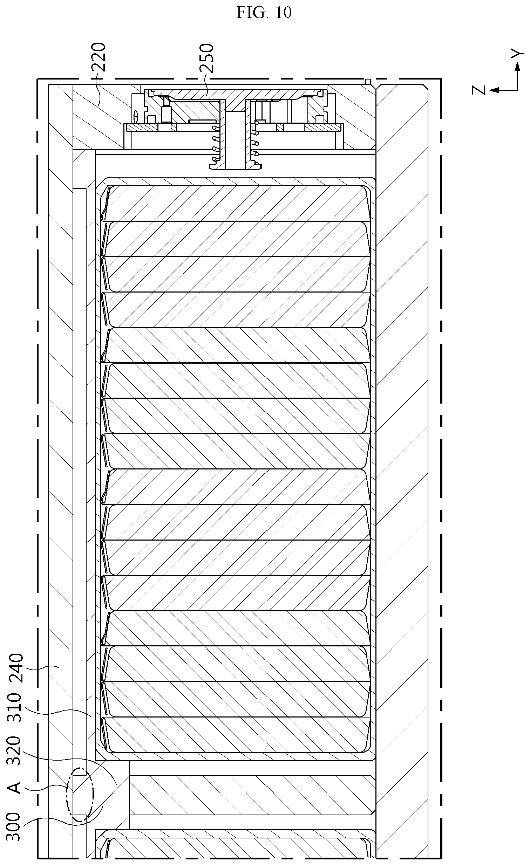

FIG. 10 is a cross-sectional view of a battery pack to which a cover member is applied according to another embodiment of the present disclosure.

As another embodiment, an empty space may be formed in the cover member 300. More specifically, the upper surface of the cover member 300 may be configured to be spaced, at least in part, apart from the pack case 200. In this case, the cover member 300 may be configured to fill only a part of the space between the battery cell 100 and the pack case 200. For example, the main body 310 of the cover member 300 may be configured such that a portion of the upper surface is recessed inward.

Accordingly, as shown in part A in FIG. 10, another portion of the upper surface of the cover member 300 may be configured to protrude upward. In particular, the upper protrusion structure of the cover member 300 may be provided above the cross-beam 230. In addition, the upper protrusion structure of the cover member 300 may be provided on the edge of the battery module 10, in particular, on the edge of the battery module 10 located at the outermost inside the pack case 200.

According to the above-implemented configuration of the present disclosure, an air layer may be formed in the cover member 300 to improve the insulation of the cover member 300. In addition, since an empty space is formed on the cover member 300 provided on the top of the battery module 10, when the upper surface of the module case 11 expands outward due to heat, the main body 310 of the cover member 300 may also expand corresponding thereto.

In addition, according to the above-implemented configuration of the present disclosure, since the upper protrusion structure is provided in the cover member 300, when the upper surface of the module case 11 expands, the cover member 300 may be minimized from bulging from the module case 11. Accordingly, excessive expansion of the upper surface of the module case 11 may be suppressed.

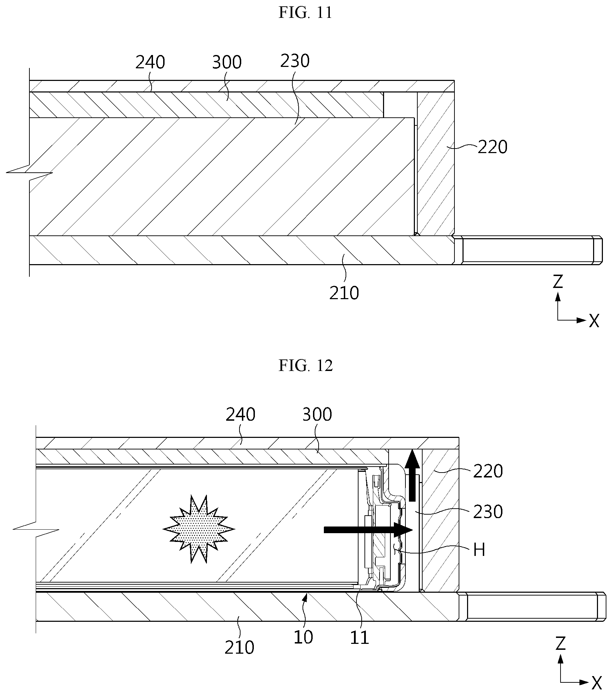

A direction in which venting gas moves when thermal runaway occurs in the battery module 10 inside the battery pack 20 according to an embodiment of the present disclosure will be described with reference to FIGS. 11 to 13.

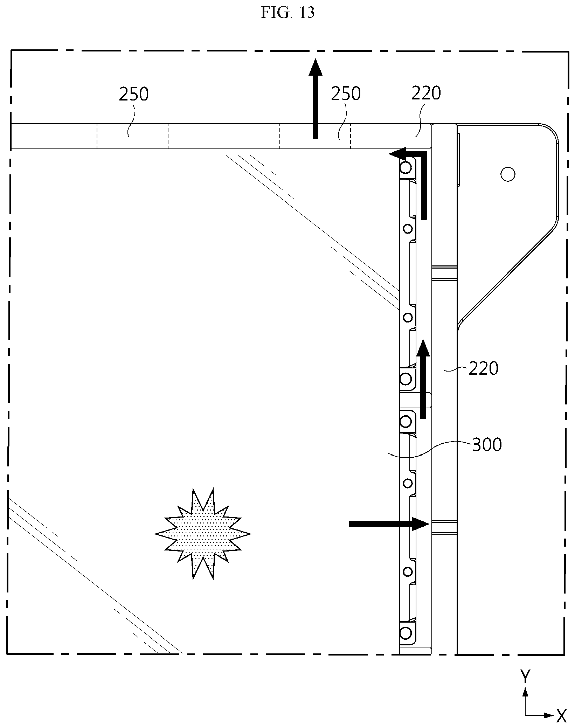

FIG. 11 is a cross-sectional view of a battery pack according to an embodiment of the present disclosure. FIG. 12 is a cross-sectional view of a battery pack according to an embodiment of the present disclosure, which illustrates a discharge direction of venting gas during thermal runaway of a battery module. In addition, FIG. 13 is a top view of a battery pack according to an embodiment of the present disclosure, which illustrates a discharge direction of venting gas during thermal runaway of a battery module.

Meanwhile, the cover member 300 may be configured to be spaced a predetermined distance apart from the side frame 220. In particular, the end of the cover member 300 may be configured to be spaced apart from the side frame 220 located at both sides of the pack case 200 in the front-back direction, that is, at the rear side of the battery module 10 (in the +X-axis or -X-axis direction in FIG. 13). The cover member 300 may be configured not to cover the end of the cross-beam 230 around the side frame 220. Venting gas or the like may be configured to be movable between the cover member 300 and the side frame 220.

The cover member 300 may be configured to guide the venting gas or the like to the space between the side frame 220 and the cover member 300 inside the battery pack 20. Accordingly, the venting gas or the like may move to both sides of the pack case 200 in the front-back direction.

Specifically, when thermal runaway occurs in the battery module 10, as indicated by the arrows in FIG. 12, the venting gas or the like may be discharged through the venting hole H provided on the rear side of the battery module 10 and may move toward the top of the battery module 10. Thereafter, as indicated by the arrows in FIG. 13, the venting gas or the like may move to the space between the cover member 300 and the cross-beam 230.

According to the above-implemented configuration of the present disclosure, a venting path for the venting gas or the like may be secured inside the battery pack 20. In addition, the venting path in the battery pack 20 may be configured as a specific path, instead of being diversified in various directions, thereby preventing the components from being damaged unintendedly.

In addition, according to the above-implemented configuration of the present disclosure, the venting gas or the like may be guided to move to the top of the battery module 10, thereby preventing the venting gas or the like from flowing into the venting hole H of the adjacent battery module 10 while moving.

Furthermore, according to the above-implemented configuration of the present disclosure, in the case where a plurality of battery modules 10 are arranged so that their module terminals 12 face each other, venting gas or flames may be more effectively suppressed from heading toward the module terminals 12.

In addition, according to the above-implemented configuration of the present disclosure, since the battery module 10 is disposed as close as possible to the side frame 220, the volume of the battery module 10 may be maximized. As a result, the energy efficiency of the battery module 10 and the battery pack 20 may be maximized.

Meanwhile, the pack case 200 may include a venting device 250. The venting device 250 may be configured to discharge venting gas or flames generated from the battery module 10 to the outside of the pack case 200. The venting device 250 may be configured in the form of a hole connecting the inside and the outside of the pack case 200. Alternatively, the venting device 250 may be configured to be mountable in a hole of the pack case 200 and to operate when discharges are generated inside the pack case 200.

The venting device 250 may be provided on the side of the pack case 200, i.e., on the side frame 220. A plurality of venting devices 250 may be provided. The venting device 250 may be provided on at least some of the unit walls of the side frame 220. In addition, the venting device 250 may be formed on two or more unit walls, respectively, or two or more venting devices 250 may be formed on one unit wall. For example, referring to FIG. 13, a plurality of venting devices 250 may be provided on the front wall and the rear wall, respectively. In addition, a plurality of venting devices 250 may be provided symmetrically relative to the central axis of the side frame 220.

According to the above-implemented configuration of the present disclosure, when the battery cell 100 is in an abnormal state, high-temperature gas or the like may be discharged in both directions of the pack case 200, so that it is easy to discharge the gas or the like more quickly to the outside of the pack case 200.

Meanwhile, the number of installations or locations of the venting devices 250 described in the embodiment in FIG. 13 or the like are only examples, and may also vary to other values.

The venting device 250 may be configured to communicate with the space between the cover member 300 and the side frame 220. In this case, the cover member 300 may be configured to guide venting gas or flames discharged from the battery module 10 to the venting device 250. That is, as indicated by the arrows in FIG. 13, the venting gas or the like discharged to the rear side of the battery module 10 through the venting hole H may move to the space between the cover member 300 and the side frame 220 and then move to the venting device 250.

According to the above-implemented configuration of the present disclosure, the venting direction of the battery module 10 and the movement direction inside the venting path in the battery pack 20 may be configured to be connected to each other. Accordingly, when a thermal event occurs in the battery module 10, the cover member 300 may guide the venting gas or flame toward the venting device 250, thereby discharging the venting gas or the like more quickly to the outside of the pack case 200. Therefore, the internal pressure of the pack case 200 may be prevented from increasing.

In addition, during the process of venting gas or flame moving to the venting device 250, the venting gas or flame may be minimized from moving toward other battery modules 10 or module terminals 12. Therefore, further chain ignition of other battery modules 10 may be prevented.

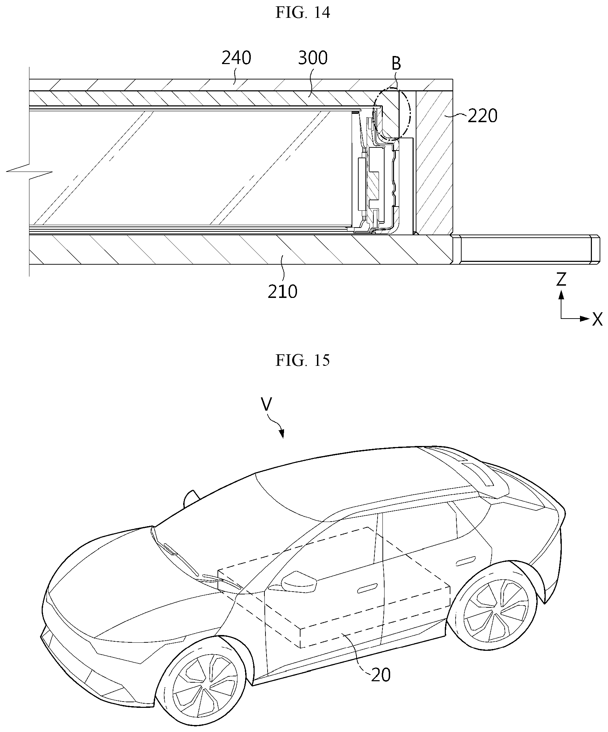

FIG. 14 is a cross-sectional view of a battery pack to which a cover member is applied according to another embodiment of the present disclosure.

As another embodiment, the end of the cover member 300 may be configured to be bent to surround a portion of the module case 11. For example, as shown in part B in FIG. 14, the end of the cover member 300 may be configured to surround the upper portion of the rear surface of the module case 11 (in the +X-axis direction in FIG. 14).

According to the above-implemented configuration of the present disclosure, the venting gas or the like discharged from the venting hole H provided on the rear side of the battery module 10 may be prevented from flowing into the gap between the module case 11 and the cover member 300. Accordingly, the venting gas, flame, dust, or the like may be more effectively suppressed from moving into the space between the upper side of the module case 11 and the upper side of the pack case 200.

FIG. 15 is a schematic perspective view of a vehicle including a battery pack according to an embodiment of the present disclosure.

Referring to FIG. 15, a vehicle V according to an embodiment of the present disclosure may include one or more battery packs 20 according to an embodiment of the present disclosure. The vehicle V according to the present disclosure may be, for example, an electric vehicle, a hybrid vehicle, or a plug-in hybrid vehicle. The vehicle V includes a four-wheel vehicle and a two-wheel vehicle. The vehicle V may be operated by power supplied from a battery pack 20 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery pack comprising:
a plurality of battery cells;
a pack case configured to store the plurality of battery cells; and
a cover member provided in a space between the plurality of battery cells and the pack case so as to extend in a horizontal direction, and configured to block movement of venting gas generated from the battery cell.

2. The battery pack according to claim 1,
further comprising a plurality of module cases configured to store the plurality of battery cells by grouping them, and having a venting hole formed on at least one side thereof to allow venting gas to be discharged to the outside.

3. The battery pack according to claim 2,
wherein some of the plurality of module cases are disposed so that front surfaces where module terminals are provided face each other, and
wherein the venting hole is formed on a rear side of the module case.

4. The battery pack according to claim 2,
wherein the cover member is configured to surround an upper portion of a rear side of the module case.

5. The battery pack according to claim 1,
wherein the pack case comprises a cross-beam provided between the plurality of battery cells, and
wherein the cover member is configured to cover a top of the cross-beam.

6. The battery pack according to claim 5,
wherein the cross-beam is configured to have a height less than that of the battery cell, and
wherein the cover member is configured such that at least a portion thereof protrudes toward the cross-beam.

7. The battery pack according to claim 5,
wherein the cover member is configured to be in close contact with the cross-beam.

8. The battery pack according to claim 5,
wherein the cover member is configured to cover a top of both the cross-beam and the battery cell.

9. The battery pack according to claim 5,
wherein the cover member is configured such that the cross-beam is inserted thereinto.

10. The battery pack according to claim 1,
wherein the cover member is configured as a single sheet covering the plurality of battery cells.

11. The battery pack according to claim 1,
wherein the pack case comprises
a base frame configured such that the battery cells are seated thereon, and
a side frame configured to extend upward from an edge of the base frame, and
wherein the cover member is configured to be spaced a predetermined distance apart from the side frame.

12. The battery pack according to claim 11,
wherein the pack case comprises
a venting device configured to communicate with a space between the cover member and the side frame.

13. A vehicle comprising a battery pack according to any one of claims 1 to 12.
